# EUROPEAN PATENT APPLICATION

(11) **EP 2 584 273 A1**
(43) Date of publication of application: **24.04.2013**
(21) Application number: 11008342.5
(22) Date of filing: 17.10.2011
(51) Int. Cl.: F24D 19/10, G05D 23/20

(54) **Temperature controlling system and method of operating a temperature controlling system**

(71) Applicant: Danfoss A/S, 6430 Nordborg (DK)
(72) Inventor: Gammeljord, Peter, 7100 Vejle (DK); Joergensen, Martin, 6000 Kolding (DK)
(74) Representative: Knoblauch, Andreas

(57) **Abstract**

The invention relates to a temperature controlling system and a method of operating the temperature controlling system. The temperature controlling system comprises an unit (3) for supplying energy to temperatured zones (4a - 4e) and a central control unit (2) for controlling at least the unit for supplying energy (3) in relation to an amount of energy required in the zones (4a - 4e).

In the control unit (2) the zones (4a - 4e) are selected whose amount of energy is considered by the control unit (2). This reduces the energy consumption of the unit for supplying energy (3).

## Description

The invention relates to a temperature controlling system comprising at least two temperatured zones, at least one unit for supplying energy to the zones and a central control unit for controlling at least the unit in relation to an amount of energy required in the zones.

Further, the invention relates to a method of operating a temperature controlling system of the type comprising a unit for supplying energy to temperatured zones and a central control unit for controlling at least the unit in relation to an amount of energy required in the zones.

In such temperature controlling systems typically a boiler is used as an unit for supplying energy, which operates with gas or oil to heat up a fluid like water, which is distributed to heat exchangers like radiators or under floor heating systems. The boiler and the heat exchangers are connected by pipes through which the fluid is pumped. Instead of heating, cooling of a zone could be possible.

In the following, the term "boiler" is used for the unit supplying energy and the term "heat" for energy.

Each heat exchanger comprises for example an input valve which limits the flow through the heat exchanger, so that an energy output, for example heat output, can be controlled. Thermostatic controlled valves are often used which adjust a flow automatically in relation to a set temperature. A flow of the fluid through the heat exchanger should be sufficient to balance heat losses from the room thus maintaining a constant temperature.

It is known, to turn off the boiler if the valves are closed since this indicates that the heat demand in the heat exchangers is zero.

GB 2464095 A shows a thermostatic heating control system for several rooms having a heat exchanger in each room. In each room an individual temperature is set by means of a thermostatic valve connected to the heat exchanger. A boiler, which produces heat, is turned off, if the temperature in all rooms is higher or equal to a predetermined temperature. The boiler is restarted, if the temperature in at least one room is less than the predetermined temperature. For controlling the boiler, a wired or wireless communication is used. Therefore, a transmitter is arranged at the valves and a receiver is connected with a control unit of the boiler.

EP 2 144 015 A2 describes thermostatic radiator valves and a control thereof, which are used in a heating system. The heating system is provided with a boiler, which is controlled in reference to positions of the radiator valves. The valves can be actuated by actuators or by thermostatic elements. The boiler is turned off, if a first specified number of valves are closed. If a second specified number of valves are open, the boiler is restarted. Therein, a wireless communication system is provided between the boiler, the radiator valves and a system controller. Optionally an occupancy sensor is installed in the rooms. This is used to influence a nominal temperature in the rooms. If a person is in the room, the target temperature is increased, and if a room is empty, the temperature is decreased.

With this solutions energy is saved by turning off the boiler, if the amount of heat requested by heat exchangers is very small or zero.

It is an object of the invention to reduce the energy consumption of the unit further.

This object is achieved with a temperature controlling system comprising the features of claim 1.

Since the control unit is adapted to consider only the amount of energy of selected zones, not all zones are used in the same way. For example, a temperature of zones like a storage zone have a lower priority than a living zone. Unnecessary heating or cooling of zones is then avoided. Only the selected zones are used as a reference in an optimization routine of the control unit. According to this routine the control unit sets the on/off-periods of the boiler or supply unit and controls therewith the energy output to be delivered by the boiler. By using only the energy demand of selected zones instead of all zones, the temperature in the selected zones is kept at the desired level and varies in the other zones. Since this zones are normally infrequently used, this is no drawback. The on-periods of the boiler are reduced and therefore energy is saved.

Optionally the control unit comprises a display for displaying selected and unselected zones and an input equipment for selecting the zones. This is a comfortable way to select the zones manually and to check or amend the settings.

Advantageously the control unit comprises at least the following control modes:
1. Automatic on/off
2. TPI, 6 cycles/hour
3. TPI, 3 cycles/hour
4. Always on.

In the automatic on/off-mode the unit for supplying energy, in most cases a boiler, is only on when needed. If any zone requests heat, the boiler is turned on, and if the heat demand is very small, the boiler is turned off.

For example, the valve opening parameters are used as an indication for the amount of heat required in the zones. The mode TPI, 6 cycles/hour is recommend for gas boilers. The heat provided to the zones is controlled by adjusting the duty cycle of the boiler, in other words, the on-time and the off-time. If the boiler on-time is lowered, the valve opening will increase. The system seek to make the boiler run as little as possible. When this is achieved, a zone with the highest heat demand will have almost fully open valves. The mode TPI, 3 cycles/hour is recommended for oil and works in the same way. In the mode "Always on" the boiler is always on and it works independent of the selected zones. It is possible to select the preferred control mode. Only in the automatic mode the selected zones are neglected.

Preferably in each zone is installed at least one valve and/or a sensor communicating with the control unit. In particular a wireless communication is used. For example, the temperature in each zone can be controlled and the heat demand in each zone can be measured. With a wireless communication the installation of the system is quite easy.

Advantageously a service device is installed at the unit for supplying energy communicating with the control unit. This service device is adapted to the type of unit or boiler respectively and receives and converts the signals of the control unit. Then it is possible to use different kind of units. The adaptation to the system is done by means of a service device, which is for example adapted to the special type of boiler. An update of existing systems is then possible without great efforts.

Preferably, a target temperature of each zone is adjustable in the control unit. The operating of the system is then very comfortable. All the inputs can be done in the central control unit.

As an alternative the target temperature can be adjusted at the heat exchangers or at the service device or both. So each of the elements, the control unit, the service device and the heat exchanger, can comprise some "intelligence".

Each zone can be a room of a building. For example, at least one room comprises an under floor heating system. In other rooms radiators can be used as heat exchangers.

The object is achieved by a method comprising the features of claim 8.

By selecting zones and considering only the amount of energy required in this selected zones, the energy consumption of the unit or boiler respectively can be reduced. Only enough energy to heat or cool all the selected zones must be available. The other zones are heated or cooled only if sufficient energy is disposable. So the boiler can run as little as possible. Only the selected zones are used as reference in an optimization routine of the control unit. So the run time of the boiler is minimized and the energy consumption is reduced.

Preferably, the zones are selected from a list stored in the control unit. The zones can be added or deleted from the list manually. The selection from a list is quite comfortable.

Preferably, the amount of heat is detected by means of valves and/or sensors installed in each zone. For example, the position of a valve element is used as reference for the requested amount of energy. The position of the valve elements can be influenced by a thermostatic element or an actuator and can be detected by a sensor. In another example the sensor is formed as a temperature sensor and detects temperature deviations in the zone. If the temperature decreases, heat is demanded.

Preferably, the control unit communicates wireless with the valves and all sensors. This is an easy way to implement the communication in existing structures. If a service device is installed at the boiler, the service device can communicate wireless with the central control unit, too. The invention can also be used with a system that is wired all the way through.

Advantageously a target temperature for each zone is adjusted in the control unit. So all input can be done in one central unit. This is quite comfortable.

Alternatively or additionally an input equipment can be arranged at the heat exchangers, the valves or the service device.

Preferably one of the following control modes of the control unit is selected:
1. Automatic on/off
2. TPI, 6 cycles/hour
3. TPI, 3 cycles/hour
4. Always on.

Then it is possible to adapt the control mode to the circumstances. Automatic on/off mode is the default mode, but sometimes it can be necessary to use another mode. The system is then very flexible.

All the features described in relation to the system can be implemented in the method and vice versa.

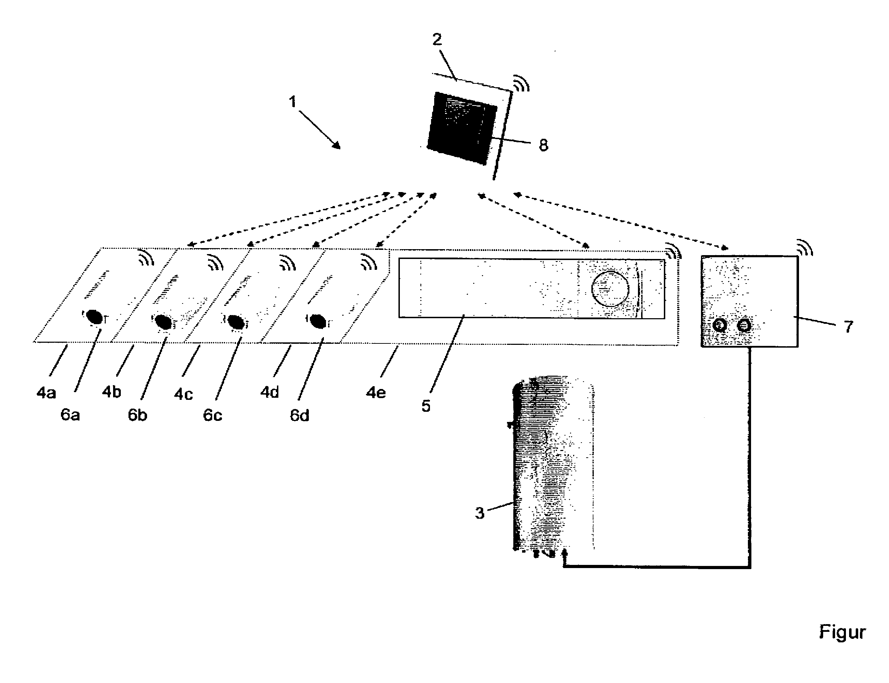

The present invention will now be more particularly described by way of example only with reference to the accompanying drawings, in which:
the only figure shows schematically a temperature controlling system.

The figure shows a temperature controlling system like a heating system 1 comprising a central control unit 2 for controlling a boiler 3 as an unit for supplying energy in relation to an amount of energy, in this case heat required in individual temperatured zones 4a - 4e. Each zone can be for example a room in a building, like a dining room, kitchen, bathroom or lounge.

The zone 4e is provided with an under floor heating system 5. In the zones 4a - 4d are installed thermostatic valves 6a - 6d. Between the control unit 2, the under floor heating system 5 and the thermostatic valve 6a - 6d is provided a wireless communication. This is symbolized by dotted lines.

The boiler 3 is provided with a service device 7 which communicates wireless with the control unit 2. The service device 7 receives and converts the signals of the control unit 2 and provides an on/off signal to the boiler. Between the boiler 3 and the service device 7 a wired connection is provided.

The control unit 2 comprises a display 8 which is formed as a touch screen. Therefore, it is possible to display information and to input parameters. In the display can be shown a list of the installed zones. The zones, which should be used as reference in an optimization routine of the control unit, can be selected. Further it is possible to add or delete zones.

The boiler is switched on, if in some of the zones heat is demanded. If no heat is demanded, the boiler is switched off. This is known under the name "boiler interlock".

The signals of the valves 6a - 6d and the under floor heating system 5 installed in the zones 4a - 4e are collected in the control unit 2 and used for controlling the boiler 3. Via the service device 7 the control unit 2 can switch on or off the boiler 3.

According to the invention it is possible to select the zones you want to include in determining, which means, that only this zones will be "switching on or off" the boiler. The unselected zones have no direct influence. In the controller there is an optimization routine that calculates the on or off periods of the boiler. Therefore, the heat output delivered by the boiler is controlled. Only the selected zones are used. If a zone is not chosen, it is not used as reference in the optimization routine. The optimization routine is part of each control mode.

The thermostatic valves 6a - 6d measure the zone temperature and compare it to a temperature set for the zone and continuously attempt to keep the desired temperature in the zone. Depending on the system intelligence, it could then be imagined that in the zones, which have usually not been permitted to turn on the boiler, a very large deviation between desired and actual temperature could be permitted. However, if this deviation became so large that it would be undesirable to make it larger, the zone in question could be entitled to turn on the boiler anyway. Therewith a frost protection or the like is achieved.

In the central control unit it is possible to manage all the settings. For example, it is possible to name the zones or valves respectively. Then it is possible to select the control modes, which influence the regulation type.

The new temperature controlling system and the new method of operating the temperature controlling system save energy, because a time when the unit for supplying energy is turned off is increased. Since all zones having a high priority are considered, the comfort is not reduced. Using a wireless communication and a service device adapted to the special type of boiler makes it possible to implement the system and the method in existing systems.

## Claims

1. Temperature controlling system comprising at least two temperatured zones, at least one unit for supplying energy to the zones and a central control unit for controlling at least the unit for supplying energy in relation to an amount of energy required in the zones, **characterized in that** the control unit (2) is adapted to consider only the amount of energy of selected zones (4a - 4e).

2. Temperature controlling system according to claim 1, **characterized in that** the control unit (2) comprises a display (8) displaying the selected and unselected zones (4a - 4e) and an input equipment for selecting the zones.

3. Temperature controlling system according to one of the claims 1 or 2, **characterized in that** the control unit comprises at least the following control modes:
a) Automatic on/off
b) TPI, 6 cycles/hour
c) TPI, 3 cycles/hour
d) Always on.

4. Temperature controlling system according to at least one of the claims 1 to 3, **characterized in that** in each zone is installed at least one valve and/or at least one sensor communicating with the control unit.

5. Temperature controlling system according to at least one of the claims 1 to 4, **characterized in that** a service device (7) is installed at the unit for supplying energy (3) communicating with the control unit (2).

6. Temperature controlling system according to at least one of the claims 1 to 5, **characterized in that** a target temperature of each zone (4a - 4e) is adjustable in the control unit (2).

7. A method of operating a temperature controlling system of the type comprising a unit for supplying energy to temperatured zones and a control unit for controlling at least the unit for supplying energy in relation to an amount of energy required in the zones, **characterized in that** zones are selected and only the amount of energy required in this selected zones is considered by the control unit.

8. Method according to claim 7, **characterized in that** the zones are selected from a list stored in the control unit.

9. Method according to claim 7 or claim 8, **characterized in that** the amount of energy is detected by means of valves or sensors installed in each zone.

10. Method according to at least one of the claims 7 to 9, **characterized in that** the control unit communicates wireless with the valves and/or sensors.

11. Method according to at least one of the claims 7 to 10, **characterized in that** a target temperature for each zone is adjusted in the control unit.

12. Method according to at least one of the claims 7 to 11, **characterized in that** a control mode of the control unit is selected.
